# EUROPÄISCHE PATENTSCHRIFT

(11) **EP 0 484 364 B1**
(45) Veröffentlichungstag und Bekanntmachung des Hinweises auf die Patenterteilung: **29.09.1993**
(21) Anmeldenummer: 90910747.6
(22) Anmeldetag: 16.07.1990
(51) Int. Cl.: B01J 35/04, B01D 53/36, F01N 3/28

(54) **WABENKÖRPER MIT INTERNEN ANSTRÖMKANTEN, INSBESONDERE KATALYSATORKÖRPER FÜR KRAFTFAHRZEUGE**
HONEYCOMB BODY WITH INTERNAL INFLOW EDGES, IN PARTICULAR CATALYST BODY FOR MOTOR VEHICLES
CORPS EN NID D'ABEILLES, A ARETES INTERNES D'ENTREE, NOTAMMENT SUPPORT DE CATALYSEUR POUR VEHICULE AUTOMOBILE

(30) Priorität: 27.07.1989 DE 8909128 U
(43) Veröffentlichungstag der Anmeldung: 13.05.1992
(73) Patentinhaber: Emitec Gesellschaft für Emissionstechnologie mbH, 53797 Lohmar (DE)
(72) Erfinder: MAUS, Wolfgang, D-5060 Bergisch Gladbach 1 (DE); SWARS, Helmut, D-5060 Bergisch Gladbach 1 (DE); WIERES, Ludwig, D-5063 Overath 1 (DE)
(74) Vertreter: Kahlhöfer, Hermann, Dipl.-Phys.
(86) Internationale Anmeldenummer: EP9001163
(87) Internationale Veröffentlichungsnummer: WO9101807

(56) Entgegenhaltungen:
- EP-A- 0 152 560
- EP-A- 0 186 801
- EP-A- 0 255 798
- GB-A- 2 001 547

## Beschreibung

Die vorliegende Erfindung betrifft einen Wabenkörper, insbesondere Katalysatorkörper für Kraftfahrzeuge, aus lagenweise angeordneten, zumindest in Teilbereichen strukturierten Blechen, die die Wände einer Vielzahl von für ein Fluid durchströmbaren Kanälen bilden. Solche metallischen Katalysator-Trägerkörper sind in vielen Varianten bekannt und beispielsweise in der EP-A-02 20 468, der EP-A-02 79 159, der EP-A-02 45 737 oder der EP-A-02 45 736 beschrieben.

Schon lange ist bekannt, daß in den meisten Anwendungsfällen und bei den üblichen Dimensionierungen solcher Wabenkörper die Strömung in den Kanälen im wesentlichen laminar ist, da sehr kleine Kanalquerschnitte verwendet werden. Unter diesen Bedingungen bauen sich an den Kanalwänden relativ dicke Grenzschichten auf, welche einen Kontakt der Kernströmung in den Kanälen mit den Wänden verringern. Diffusionsprozesse zwischen Kernströmung und Grenzschichten gleichen dies zwar teilweise aus, jedoch wurde seit langem versucht, durch besondere Strukturierung des Wabenkörpers hier Verbesserungen zu schaffen.

Aus der GB-A 2001 547 sind innere Formschlußverbindungen bekannt, die teilweise durch Umstülpungen gebildet werden. Durch deren geringe Größe und eine Verzahnung mit Nachbarblechen entstehen allerdings keine die Strömung oder die Katalytische Umsetzung beeinflussenden zusätzlichen Anströmkanten.

Aus der DE-PS-11 92 624 ist beispielsweise bekannt, den Wabenkörper aus vielen hintereinander angeordneten Scheiben herzustellen, deren Kanäle in Strömungsrichtung gegeneinander versetzt sind. Ein so zusammengesetzter Körper hat in seinem Inneren immer wieder neue Anströmkanten, an denen die Strömung geteilt wird. Dabei wurden vorzugsweise Scheiben aus spiralig gewickelten glatten und gewellten Blechen hintereinandergesetzt, wobei die Wickelrichtung jeweils geändert wurde. Diese Maßnahme ist einerseits fertigungstechnisch wegen der vielen kleinen Scheiben sehr aufwendig und führt andererseits zu unregelmäßigen Konstellationen der gegeneinander versetzten Kanäle, was bei der Beschichtung und beim späteren Betrieb von Nachteil sein kann.

In der EP-A-01 52 560 und der EP-A-01 86 801 werden Möglichkeiten zur Verwirklichung desselben Gedankens beschrieben, die fertigungstechnisch günstiger sind, da ein Wabenkörper nicht aus mehreren Scheiben zusammengesetzt werden muß. Allerdings bringen es die beschriebenen Wellformen mit sich, daß erhebliche Flächenanteile der verwendeten Bleche aneinanderliegen, wodurch die für katalytische Kontaktierung ausnutzbare Fläche im Verhältnis zum Materialeinsatz ungünstig wird.

In einem zusammenfassenden Artikel von M. Nonnenmann: "Neue Metallträger für Abgaskatalysatoren mit erhöhter Aktivität und innerem Strömungsausgleich", ATZ Automobiltechnische Zeitschrift 91 (1989) 4, Seiten 185 - 192, in dem die Vorteile und Wirkungen von in Strömungsrichtung gegeneinander versetzten Strömungskanälen beschrieben werden, wird auch eine Variante vorgeschlagen, bei der statt einer glatten Blechlage ein sog. Mikro-Wellband verwendet wird, wodurch die Flächenausnutzung etwas günstiger wird. Ein solches Mikro-Wellband bildet jedoch zusammen mit glatten Anlageflächen an anders strukturierten Blechbändern winzige Kanäle, welche sich bei einer späteren Beschichtung zusetzen und damit eine beachtliche Erhöhung des Druckverlustes und wiederum einen Verlust an aktiver Fläche und einen unnötigen Verbrauch an Beschichtungsmasse bewirken. Trotzdem zeigt der Artikel, daß aufgrund der fertigungstechnischen Möglichkeiten ein metallischer Katalysator-Trägerkörper einem extrudierten keramischen Körper überlegen ist, da durch konstruktive Maßnahmen die Strömungsverhältnisse im Inneren beeinflußt werden können. Dabei kann ein zusätzlicher Effekt auftreten, nämlich die Quervermischung von Strömungen in den einzelnen Kanälen durch entsprechende Verbindungswege bzw. Öffnungen in den Kanalwänden.

Im Hinblick auf den bisher beschriebenen Stand der Technik ist es Aufgabe der vorliegenden Erfindung, einen Wabenkörper zu schaffen, bei welchem die Vorteile von gegeneinander versetzten inneren Wänden ausgenutzt werden können und bei dem nur geringe Flächenanteile der einzelnen Lagen aneinanderliegen. Dabei sollen auch fertigungstechnische Gesichtspunkte berücksichtigt werden, um den Aufwand bei der Herstellung solcher Wabenkörper gering zu halten.

Diese Aufgabe wird durch einen Wabenkörper gelöst, der aus zumindest teilweise strukturierten Blechen besteht, welche die Wände einer Vielzahl von für ein Fluid durchströmbaren Kanälen bilden, wobei ein Teil der Bleche eine Hauptwellung mit Wellenbergen und Wellentälern und einer vorgebbaren Wellhöhe aufweist und wobei die Wellenberge und/oder Wellentäler mit einer Vielzahl von Umstülpungen versehen sind, deren Höhe kleiner oder gleich der Wellhöhe ist, vorzugsweise zwischen ein Drittel und zwei Drittel der Wellhöhe. Ein solcher Wabenkörper eignet sich insbesondere als Katalysator-Trägerkörper, vorzugsweise für Kraftfahrzeuge mit Verbrennungsmotoren. Die Umstülpungen schaffen im Inneren des Wabenkörpers zusätzliche Anströmkanten und bilden zusammen mit der Hauptwellung eine Struktur, die die Ausbildung von Grenzschichten beim Durchströmen eines Fluids verringert. Ein solcher Körper weist bei gleichem Materialeinsatz eine höhere katalytische Umsetzungsrate auf als entsprechende Körper ohne Umstülpungen. Bei einer lagenweisen Anordnung der strukturierten Bleche werden auch die Kontaktflächen zwischen den einzelnen Lagen durch die Umstülpungen verringert.

In Anbetracht der Strömungsverhältnisse in einem solchen Wabenkörper sollten die Umstülpungen eine Länge von etwa 4 bis 20 mm haben, vorzugsweise 8 bis 16 mm, damit sich geschlossene Grenzschichten möglichst nicht ausbilden können. Sinnvoll ist es auch, auf jedem Wellenberg und/oder jedem Wellental in Strömungsrichtung hintereinander zwei oder mehr Umstülpungen anzuordnen, um immer wieder neue zusätzliche Anströmkanten zu schaffen. Der Abstand von zwei aufeinanderfolgenden Umstülpungen auf einem Wellenberg bzw. Wellental sollte dabei in der gleichen Größenordnung liegen wie die Länge der Umstülpungen, also etwa 4 bis 20 mm, vorzugsweise 8 bis 16 mm.

Je nach der Tiefe der Umstülpungen können diese zwar direkt nebeneinander sowohl auf einem Wellenberg wie auch in einem Wellental sein, jedoch ist es aus Stabilitätsgründen günstiger, Umstülpungen auf den Wellenbergen gegenüber denen auf den Wellentälern mit einem Versatz anzuordnen, der bis etwa 30 mm betragen kann und vorzugsweise größer als die Länge der Umstülpungen ist.

Um in einem Wabenkörper noch mehr Anströmkanten zu schaffen, welche nicht miteinander fluchten, können auch zwei oder mehr Umstülpungen mit unterschiedlichen Höhen auf jedem Wellenberg und/oder jedem Wellental angeordnet werden. Bei gleichem Materialeinsatz entstehen so zusätzliche Anströmkanten, die eine fiktive Unterteilung des Wabenkörpers bewirken, so als hätte dieser eine viel größere Zahl an Kanälen als die Zahl der Wellenberge und Wellentäler der Hauptwellung.

Auf die Form der Hauptwellung und auch auf die Form der Umstülpung kommt es prinzipiell nicht an, sofern die Hauptwellung nicht zu flache Wellenberge und Wellentäler aufweist, welche große Anlageflächen mit benachbarten Lagen bilden könnten. Eine günstige Form der Hauptwellung ist eine zickzackförmige Wellung mit leicht abgerundeten Wellenbergen und Wellentälern, bei der sich geometrisch sehr übersichtliche Verhältnisse bezüglich der Umstülpung und der entstehenden Kanalformen ergeben. Herstellungstechnisch günstig und von höherer Elastizität ist eine Hauptwellung, die der Abwicklung einer Evolventenverzahnung entspricht, wie sie aus dem oben zitierten Stand der Technik auch bekannt ist. Die Umstülpungen selbst können etwa V-förmig oder U-förmig, ggf. mit abgerundeten Kanten bzw. Übergängen zur Hauptwellung sein. Möglich ist auch eine Form der Umstülpungen, die etwa der Form der Zähne einer Evolventenverzahnung entspricht.

Die Umstülpungen können auch in besonderer Ausgestaltung der Erfindung die Strömungsführung beeinflussen, indem die Seitenflächen der Umstülpungen nicht parallel zur Strömung verlaufen. Dies kann z. B. durch unterschiedliche Höhen jeder Ausstülpung an deren beiden Stirnseiten oder durch eine geringfügige Schräglage in bezug auf die Mittellinie der Kanäle erreicht werden. Günstig ist diese Ausführung ggf. in Verbindung mit Öffnungen in eventuellen Zwischenlagen.

Außerdem kann es für die Temperaturverteilung im Wabenkörper sinnvoll sein, die Umstülpungen nicht gleichmäßig zu verteilen, sondern die Zahl der Umstülpungen pro Volumeneinheit in Strömungsrichtung zunehmen zu lassen. Dies hat eine ähnliche Wirkung wie ein Aufbau eines Wabenkörpers aus Scheiben mit in Strömungsrichtung zunehmender Zahl der Kanäle pro Querschnittsfläche.

Eine besondere Ausgestaltung der Erfindung ist ein Wabenkörper aus abwechselnden Lagen glatter oder schwach strukturierter und gewellter Bleche mit Umstülpungen, wobei der Körper gewickelt, geschichtet oder geschlungen sein kann. Erfindungsgemäß gewellte Bleche mit Umstülpungen eignen sich praktisch für alle bekannten Herstellungsverfahren, die auch auf einfach gewellte Bleche anzuwenden waren. So können Körper aus Blechstapeln mit gegensinnig verschlungenen Enden oder aus gefalteten, umeinandergeschlungenen Blechstapeln aufgebaut werden. Unter einer schwach strukturierten Blechlage ist dabei eine im Vergleich zur Hauptwellung nur mit geringer Amplitude gewellte Blechlage und/oder eine quer zur Strömungsrichtung mit geringer Amplitude strukturierte Blechlage zu verstehen, welche im Gegensatz zur Hauptwellung jedoch nicht hauptsächlich die Größe der entstehenden Kanäle in dem Wabenkörper bestimmt.

Um eine zusätzliche Quervermischung im Wabenkörper zu begünstigen, können auch in den glatten bzw. schwach strukturierten Blechlagen Öffnungen vorgesehen werden. Dies verringert die nahezu linienförmigen Berührungsflächen zwischen glatten und gewellten Blechlagen weiter, so daß eine besonders günstige Ausnutzung des eingesetzten Materials für katalytisch aktive Oberflächen erreicht wird.

Alle bei metallischen Wabenkörpern bekannten zusätzlichen Maßnahmen zur Verbesserung der Elastizität, der Haltbarkeit, der Wirksamkeit und der leichten Herstellbarkeit, können im wesentlichen auf die vorliegende Erfindung übertragen werden. So ist es insbesondere möglich, die Berührungsflächen der Blechlagen zumindest in Teilbereichen miteinander zu verlöten oder die Blechlagen mit einem den Wabenkörper umgebenden Mantelrohr fügetechnisch zu verbinden.

Zur Veranschaulichung der Erfindung sind in der Zeichnung schematisch Ausführungsbeispiele der vorliegenden Erfindung erläutert. Es zeigen
Figur 1 eine perspektivische Ansicht eines kleinen Stückes eines erfindungsgemäß mit Umstülpungen versehenen gewellten Bleches,
Figur 2 die Stirnansicht auf einen Ausschnitt einer Blechlage eines erfindungsgemäß mit Umstülpungen versehenen Wabenkörpers,
Figur 3 eine stirnseitige Ansicht einer Lage eines erfindungsgemäßen Wabenkörpers mit zwei unterschiedlich hohen Umstülpungen und
Figur 4 einen Querschnitt durch einen Teil einer Lage eines erfindungsgemäßen Wabenkörpers mit einer anderen Form der Hauptwellung und der Umstülpungen.

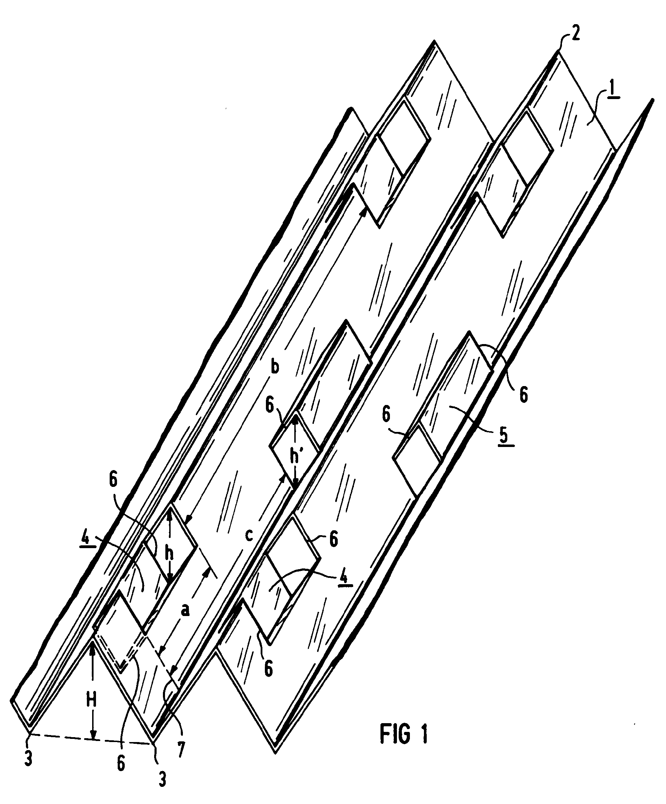

Figur 1 zeigt ein kleines Stück eines strukturierten Bleches 1, welches mit Umstülpungen 4 auf den Wellenbergen 2 und mit Umstülpungen 5 auf den Wellentälern 3 versehen ist. Aus so strukturierten Blechen, vorzugsweise in Verbindung mit glatten Blechen als Zwischenlagen, lassen sich erfindungsgemäße Wabenkörper schichten, wickeln oder in Form verschlungener Blechstapel in an sich bekannter Weise herstellen. Die Umstülpungen 4, 5 führen zu zusätzlichen Anströmkanten 6 im Inneren eines solchen Wabenkörpers, wodurch dessen Wirksamkeit erheblich verbessert wird, ohne daß der Materialeinsatz steigt. Die Umstülpungen 4 bzw. 5 haben eine Höhe h bzw. h', wobei es im Gegensatz zu der Wellhöhe H auf die Maßhaltigkeit der Höhen der Umstülpungen 4, 5 nicht ankommt, so daß prinzipiell die einzelnen Umstülpungen 4, 5 auch unterschiedliche Höhen aufweisen können. Eine typische Wellhöhe H für die Hauptwellung liegt bei etwa 2 bis 5 mm. Bevorzugt sollten die Höhen h, h' der Umstülpungen zumindest geringfügig kleiner sein als die Wellhöhe H, damit die Umstülpungen nicht über die Wellenberge 2 bzw. Wellentäler 3 überstehen und damit ein Schichten oder Wickeln mit definiertem Abstand verhindern. Auch sollten sich keine Beschichtungsbrücken zwischen den Umstülpungen und benachbarten Lagen bilden können. Die Länge a einer Umstülpung kann zwischen 4 und 20 mm liegen, vorzugsweise bei etwa 8 bis 16 mm. Mehrere Umstülpungen 4, 5 auf einem Wellenberg 2 bzw. einem Wellental 3 sollten in ähnlichen Abständen aufeinanderfolgen, d. h. in Abständen b von 4 bis 20 mm, vorzugsweise 8 bis 16 mm. Aus Stabilitätsgründen ist es vorzuziehen, daß Umstülpungen 4 von Wellenbergen 2 nicht unmittelbar benachbart zu Umstülpungen 5 von Wellentälern 3 liegen, obwohl dies prinzipiell möglich ist. Ein Versatz c in Strömungsrichtung von bis zu 30 mm ist konstruktiv sinnvoll. Vorzugsweise sollte der Versatz c jedenfalls einige mm größer als die Länge a der Umstülpungen 4, 5 sein.

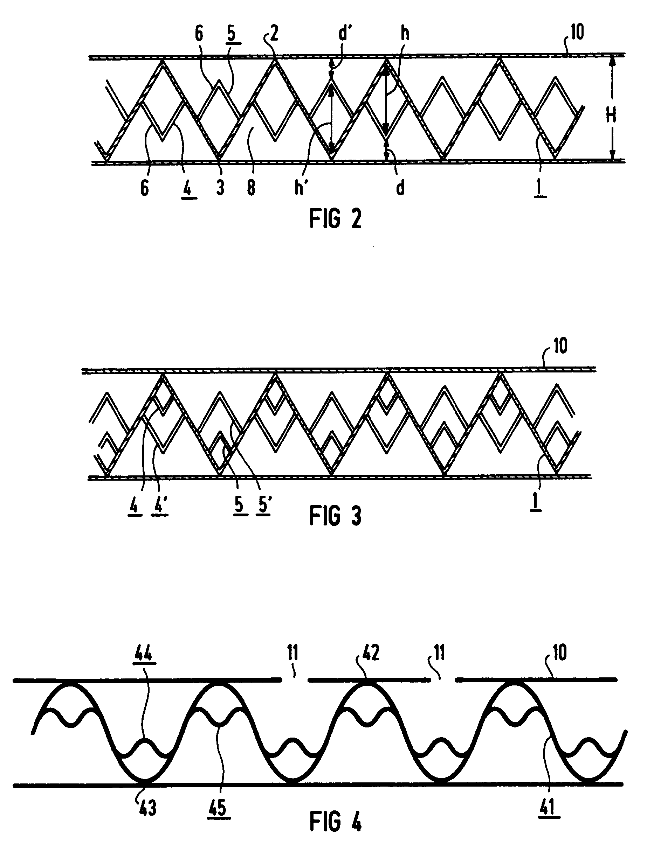

Figur 2 zeigt eine stirnseitige Ansicht eines Teils einer Lage aus einem erfindungsgemäßen Wabenkörper in schematischer Darstellung. Ein zwischen zwei angrenzenden glatten oder gering strukturierten Blechen 10 liegendes gewelltes Blech 1 weist eine Hauptwellung mit der Höhe H auf mit Wellenbergen 2 und Wellentälern 3. Umstülpungen 4, 5 erzeugen zusätzliche Anströmkanten 6 im Inneren des Wabenkörpers. In Figur 2 sind die Höhen h, h' der Umstülpungen 4, 5 kleiner als die Wellhöhe H, so daß zu den jeweils benachbarten glatten oder gering strukturierten Blechlagen 10 ein Abstand d bzw. d' verbleibt. Dieser Abstand d, d' sollte so groß sein, daß beim späteren Beschichten des Wabenkörpers mit keramischer Masse keine unerwünschten, später abbröckelnden Materialbrücken entstehen können. Trotzdem bilden die Anströmkanten 6 eine Struktur, als hätte der Wabenkörper fast dreimal soviele Strömungskanäle wie das gewellte Blech an Wellenbergen 2 und Wellentälern 3 aufweist. Entsprechend hoch ist die Wirksamkeit bei der katalytischen Umsetzung, ohne daß jedoch die entsprechende Menge an Material aufgewendet werden muß.

Figur 3 zeigt in einer der Figur 2 vergleichbaren Ansicht, welche Wirkung hintereinander angeordnete unterschiedlich hohe Umstülpungen 4, 4' bzw. 5, 5' haben. Es entstehen nicht miteinander fluchtende Anströmkanten, die dem Wabenkörper bezüglich seiner Wirksamkeit eine höhere Effektivität geben als der durch das gewellte Band 1 vorgegebenen Zahl der Strömungskanäle entsprechen würde.

Figur 4 zeigt im Querschnitt durch den Bereich einer Lage eines erfindungsgemäßen Wabenkörpers weitere mögliche Formen der Wellung und der Umstülpungen. Das gewellte Blech 41, welches zwischen zwei glatten oder schwach strukturierten Blechlagen 10 liegt, weist etwa die Form einer abgewickelten Evolventenverzahnung auf. Auch die Umstülpungen 44, 45 haben die Form der Zähne einer Evolventenverzahnung mit gerundeten Übergängen zur Hauptwellung. Wellenberge 42 und Wellentäler 43 können ggf. mit den angrenzenden glatten Blechlagen 10 verlötet sein. Zusätzlich können die glatten Blechlagen 10 Öffnungen 11 aufweisen, welche eine Quervermischung des in dem Wabenkörper strömenden Fluids zwischen den einzelnen Lagen und Kanälen begünstigen.

Zur Herstellung eines erfindungsgemäß gewellten und mit Umstülpungen versehenen Bleches gemäß Figur 1 kann ein glatter Blechstreifen zunächst durch ein Paar Wellwalzen mit der Hauptwellung geführt werden, woran sich ein zweiter Wellschritt mit Wellwalzen einer kleineren Wellung 7, wie in Figur 1 gestrichelt angedeutet, anschließt, welche jeweils nur einen Teil der Breite des Blechbandes 1 bearbeiten. Andere Herstellungsverfahren, z. B. das gezielte Falten eines an den späteren Anströmkanten 6 geschlitzten Bleches sind möglich. Die weiteren Arbeitsschritte bei der Herstellung eines erfindungsgemäßen Wabenkörpers unterscheiden sich nicht von denen mit einfach gewellten Blechen nach dem Stand der Technik.

Erfindungsgemäße Wabenkörper eignen sich wegen ihres verringerten Gewichtes, des geringeren Materialeinsatzes und der hohen Wirksamkeit insbesondere als Katalysator-Trägerkörper bei Kraftfahrzeugen mit Verbrennungsmotoren.

## Patentansprüche

1. Wabenkörper, insbesondere Katalysator-Trägerkörper, aus zumindest teilweise strukturierten Blechen (1, 10), welche die Wände einer Vielzahl von für ein Fluid durchströmbaren Kanälen (8) bilden, **dadurch gekennzeichnet**, daß ein Teil der Bleche (1) eine Hauptwellung mit Wellenbergen (2) und Wellentälern (3) und einer vorgebbaren Wellhöhe (H) aufweist, wobei die Wellenberge (2) und/oder Wellentäler (3) mit einer Vielzahl von Umstülpungen (4, 5; 4', 5'; 44, 45) versehen sind, deren Höhe (h, h') kleiner oder gleich der Wellhöhe (H) ist, vorzugsweise zwischen 1/3 und 2/3 der Wellhöhe, wobei die Umstülpungen (4, 5; 4', 5'; 44, 45) im Innern der Kanäle (8) zusätzliche Anströmkanten bilden.

2. Wabenkörper nach Anspruch 1, **dadurch gekennzeichnet**, daß die Länge (a) der Umstülpungen (4, 5; 4', 5'; 44, 45) in Strömungsrichtung 4 bis 20 mm beträgt, vorzugsweise 8 bis 16 mm.

3. Wabenkörper nach Anspruch 1 oder 2, **dadurch gekennzeichnet**, daß auf jedem Wellenberg (2) und/oder jedem Wellental (3) in Strömungsrichtung hintereinander zwei oder mehr Umstülpungen (4, 5, 4', 5', 44, 45) vorhanden sind.

4. Wabenkörper nach Anspruch 3, **dadurch gekennzeichnet**, daß der Abstand (b) zwischen zwei aufeinanderfolgenden Umstülpungen (4; 4'; 44 bzw 5; 5'; 45) auf einem Wellenberg (2) bzw. Wellental (3) 4 bis 20 mm beträgt, vorzugsweise 8 bis 16 mm.

5. Wabenkörper nach Anspruch 1, 2, 3 oder 4, **dadurch gekennzeichnet**, daß die Umstülpungen (4; 4'; 44) der Wellenberge (2) gegenüber den Umstülpungen (5; 5'; 45) um einen Versatz (c) gegeneinander in Strömungsrichtung verschoben sind, der zwischen 0 und 30 mm beträgt, vorzugsweise größer als die Länge (a) der Umstülpungen (4; 4'; 44).

6. Wabenkörper nach einem der vorhergehenden Ansprüche, **dadurch gekennzeichnet**, daß zwei oder mehr Umstülpungen (4, 4', 5, 5') mit unterschiedlichen Höhen (h, h') auf jedem Wellenberg (2) und/oder jedem Wellental (3) vorhanden sind.

7. Wabenkörper nach einem der vorhergehenden Ansprüche, **dadurch gekennzeichnet**, daß die Hauptwellung etwa zickzackförmig mit leicht abgerundeten Wellenbergen (2) und Wellentälern (3) ist.

8. Wabenkörper nach einem der Ansprüche 1 bis 6, **dadurch gekennzeichnet**, daß die Hauptwellung etwa der Abwicklung einer Evolventenverzahnung entspricht.

9. Wabenkörper nach einem der vorhergehenden Ansprüche, **dadurch gekennzeichnet**, daß die Umstülpungen (4, 5; 4', 5'; 44, 45) etwa V-förmig oder U-förmig ist mit abgerundeten Kanten bzw. Übergängen zur Hauptwellung.

10. Wabenkörper nach einem der Ansprüche 1 bis 8, **dadurch gekennzeichnet**, daß die Umstülpungen (4, 5; 4', 5'; 44, 45) etwa die Form der Zähne einer Evolventenverzahnung haben.

11. Wabenkörper nach einem der vorhergehenden Ansprüche, **dadurch gekennzeichnet**, daß die Umstülpungen (4, 5; 4', 5'; 44, 45) an ihren Enden unterschiedliche Höhen (h bzw. h') aufweisen, so daß die Wandflächen der Umstülpungen in einem spitzen Winkel zu der durch die Hauptwellung vorgegebenen Richtung der Kanäle verlaufen.

12. Wabenkörper nach einem der vorhergehenden Ansprüche, **dadurch gekennzeichnet**, daß die Zahl der Umstülpungen (4, 5; 4', 5'; 44, 45) pro Volumeneinheit in dem Wabenkörper in Richtung der durch die Hauptwellung gebildeten Kanäle von einer Stirnseite zur anderen zunimmt.

13. Wabenkörper nach einem der vorhergehenden Ansprüche, **dadurch gekennzeichnet**, daß der Wabenkörper aus abwechselnden Lagen glatter oder schwach strukturierter (10) und gewellter Bleche (1) mit Umstülpungen (4, 5; 4', 5', 44, 45) gewickelt, geschichtet oder geschlungen ist.

14. Wabenkörper nach Anspruch 13, **dadurch gekennzeichnet**, daß die glatten oder schwach strukturierten Bleche (10) Öffnungen (11) aufweisen.

15. Wabenkörper nach Anspruch 13 oder 14, **dadurch gekennzeichnet**, daß die Wellenberge (2) und Wellentäler (3) nur schmale Berührungsflächen mit den glatten Blechlagen (10) bilden.

16. Wabenkörper nach Anspruch 15, **dadurch gekennzeichnet**, daß die Berührungsflächen der Blechlagen (1, 10) zumindest in Teilbereichen miteinander verlötet sind.

## Claims

1. A honeycomb body, in particular a catalyst carrier body, comprising at least partially structured plates (1, 10) which form the walls of a plurality of passages (8) for a flow of a fluid therethrough, characterised in that a part of the plates (1) has a main wave configuration with wave crests (2) and wave troughs (3) and a predeterminable wave height (H), wherein the wave crests (2) and/or wave troughs (3) are provided with a plurality of inversion portions (4, 5; 4', 5'; 44, 45), the height (h, h') of which is smaller than or equal to the wave height (H) and is preferably between one-third and two-thirds of the wave height, wherein the inversion portions (4, 5; 4', 5'; 44, 45) form additional flow-incident edges in the interior of the passages (8).

2. A honeycomb body according to claim 1 characterised in that the length (a) of the inversion portions (4, 5; 4', 5'; 44, 45) in the flow direction is from 4 to 20 mm and preferably from 8 to 16 mm.

3. A honeycomb body according to claim 1 or claim 2 characterised in that two or more inversion portions (4, 5, 4', 5', 44, 45) are provided one behind the other in the flow direction on each wave crest (2) and/or each wave trough (3).

4. A honeycomb body according to claim 3 characterised in that the spacing (b) between two successive inversion portions (4; 4'; 44 and 5; 5'; 45) on a wave crest (2) or wave trough (3) respectively is from 4 to 20 mm and preferably from 8 to 16 mm.

5. A honeycomb body according to claims 1, 2, 3 or 4 characterised in that the inversion portions (4; 4'; 44) of the wave crests (2) are displaced in the flow direction relative to the inversion portions (5; 5'; 45) by a displacement (c) relative to each other which is between 0 and 30 mm, preferably greater than the length (a) of the inversion portions (4; 4'; 44).

6. A honeycomb body according to one of the preceding claims characterised in that there are two or more inversion portions (4, 4', 5, 5') of different heights (h, h') on each wave crest (2) and/or each wave trough (3).

7. A honeycomb body according to one of the preceding claims characterised in that the main wave configuration is approximately zig-zag in shape with slightly rounded-off wave crests (2) and wave troughs (3).

8. A honeycomb body according to one of claims 1 to 6 characterised in that the main wave configuration approximately corresponds to the development of an involute tooth configuration.

9. A honeycomb body according to one or more of the preceding claims characterised in that the inversion portions (4, 5; 4', 5'; 44, 45) are approximately V-shaped or U-shaped with rounded-off edges or transitions to the main wave configuration.

10. A honeycomb body according to one of claims 1 to 8 characterised in that the inversion portions (4, 5; 4', 5'; 44, 45) are approximately in the shape of the teeth of an involute tooth configuration.

11. A honeycomb body according to one of the preceding claims characterised in that the inversion portions (4, 5; 4', 5'; 44, 45) are of different heights (h and h' respectively) at their ends so that the wall surfaces of the inversion portions extend at an acute angle relative to the direction of the passages, which is predetermined by the main wave configuration.

12. A honeycomb body according to one of the preceding claims characterised in that the number of inversion portions (4, 5; 4', 5'; 44, 45) per unit of volume in the honeycomb body increases in the direction of the passages formed by the main wave configuration from one end to the other.

13. A honeycomb body according to one of the preceding claims characterised in that the honeycomb body is produced by winding, stacking or twisting from alternate layers of smooth or slightly structured (10) and wavy plates (1) with inversion portions (4, 5; 4', 5'; 44, 45).

14. A honeycomb body according to claims 13 characterised in that the smooth or slightly structured plates (10) have openings (11).

15. A honeycomb body according to claim 13 or claim 14 characterised in that the wave crests (2) and wave troughs (3) form only narrow contact surfaces with the smooth plate layers (10).

16. A honeycomb body according to claim 15 characterised in that the contact surfaces of the plate layers (1, 10) are soldered together at least in portions thereof.

## Revendications

1. Corps en nid d'abeilles, notamment corps support de catalyseur, constitué de tôles (1, 10) au moins partiellement structurées, qui forment les parois d'une multiplicité de canaux (8) dans lesquels peut s'écouler un fluide, **caractérisé** en ce qu'une partie (1) des tôles présente une ondulation principale avec des crêtes d'onde (2), des creux d'onde (3) et une hauteur d'ondulation prédéterminable (H), les crêtes d'onde (2) et/ou les creux d'onde (3) étant pourvus d'une pluralité de retroussements (4, 5 ; 4', 5' ; 44, 45) dont la hauteur (h, h') est inférieure ou égale à la hauteur d'ondulation (H), de préférence comprise entre 1/3 et 2/3 de la hauteur d'ondulation, les retroussements (4, 5 ; 4', 5' ; 44, 45) formant des arêtes d'écoulement supplémentaires à l'intérieur des canaux (8).

2. Corps en nid d'abeilles selon la revendication 1, **caractérisé** en ce que la longueur (a) des retroussements (4, 5 ; 4', 5' ; 44, 45) dans la direction d'écoulement est de 4 à 20 mm, de préférence de 8 à 16 mm.

3. Corps en nid d'abeilles selon la revendication 1 ou 2, **caractérisé** en ce que deux ou plusieurs retroussements (4, 5, 4', 5', 44, 45) se succèdent dans la direction d'écoulement sur chaque crête d'onde (2) et/ou sur chaque creux d'onde (3).

4. Corps en nid d'abeilles selon la revendication 3, **caractérisé** en ce que la distance (b) entre deux retroussements consécutifs (4 ; 4' ; 44 ou 5 ; 5' ; 45) sur une crête d'onde (2) ou un creux d'onde (3) est de 4 à 20 mm, de préférence de 8 à 16 mm.

5. Corps en nid d'abeilles selon l'une quelconque des revendications 1 à 4, **caractérisé** en ce que les retroussements (4 ; 4' ; 44) des crêtes d'onde (2), par rapport aux retroussements (5 ; 5' ; 45), sont mutuellement décalés dans la direction d'écoulement d'un déport (c) compris entre 0 et 30 mm, de préférence supérieur à la longueur (a) des retroussements (4 ; 4' ; 44).

6. Corps en nid d'abeilles selon l'une quelconque des revendications précédentes, **caractérisé** en ce que deux ou plusieurs retroussements (4, 4', 5, 5'), de hauteurs différentes (h, h'), sont prévus sur chaque crête d'onde (2) et/ou sur chaque creux d'onde (3).

7. Corps en nid d'abeilles selon l'une quelconque des revendications précédentes, **caractérisé** en ce que l'ondulation principale est approximativement en forme de zigzag, avec des crêtes d'onde (2) et des creux d'onde (3) légèrement arrondis.

8. Corps en nid d'abeilles selon l'une quelconque des revendications 1 à 6, **caractérisé** en ce que l'ondulation principale correspond approximativement au développement d'une denture à développante.

9. Corps en nid d'abeilles selon l'une quelconque des revendications précédentes, **caractérisé** en ce que les retroussements (4, 5 ; 4', 5' ; 44, 45) sont approximativement en forme de V ou de U, à arêtes arrondies ou à transitions arrondies avec l'ondulation principale.

10. Corps en nid d'abeilles selon l'une quelconque des revendications 1 à 8, **caractérisé** en ce que les retroussements (4, 5 ; 4', 5' ; 44, 45) ont approximativement la forme des dents d'une denture à développante.

11. Corps en nid d'abeilles selon l'une quelconque des revendications précédentes, **caractérisé** en ce que les retroussements (4, 5 ; 4', 5' ; 44, 45) présentent à leurs extrémités des hauteurs différentes (h ou h'), de sorte que les faces de paroi des retroussements s'étendent sous un angle aigu par rapport à la direction des canaux allouée par l'ondulation principale.

12. Corps en nid d'abeilles selon l'une quelconque des revendications précédentes, **caractérisé** en ce que le nombre de retroussements (4, 5 ; 4', 5' ; 44, 45) par unité de volume dans le corps en nid d'abeilles augmente d'un côté frontal à l'autre dans la direction des canaux formés par l'ondulation principale.

13. Corps en nid d'abeilles selon l'une quelconque des revendications précédentes, **caractérisé** en ce que le corps en nid d'abeilles est formé par enroulement, empilage ou bouclage de couches alternées de tôles lisses ou faiblement structurées (10) et de tôles ondulées (1) présentant des retroussements (4, 5 ; 4', 5' ; 44, 45).

14. Corps en nid d'abeilles selon la revendication 13, **caractérisé** en ce que les tôles lisses ou faiblement structurées (10) présentent des ouvertures (11).

15. Corps en nid d'abeilles selon la revendication 13 ou 14, **caractérisé** en ce que les crêtes d'onde (2) et les creux d'onde (3) ne forment que d'étroites surfaces de contact avec les couches de tôles lisses (10).

16. Corps en nid d'abeilles selon la revendication 15, **caractérisé** en ce que les surfaces de contact des couches de tôles (1, 10) sont, au moins dans des régions partielles, mutuellement assemblées par brasage.
